# EUROPEAN PATENT SPECIFICATION

(11) **EP 1 721 762 B1**
(45) Date of publication and mention of the grant of the patent: **26.03.2008**
(21) Application number: 06251878.2
(22) Date of filing: 03.04.2006
(51) Int. Cl.: B60G 7/02, B60G 21/05, B62D 21/00, B62D 17/00

(54) **Body structure for an automobile**
Kraftfahrzeugaufbaustruktur
Structure de carrosserie pour un véhicule automobile

(30) Priority: 10.05.2005 JP 2005137505
(43) Date of publication of application: 15.11.2006
(73) Proprietor: Honda Motor Co., Ltd., Tokyo 107-8556 (JP)
(72) Inventor: Fukushi, Yoshinori, Wako-shi Saitama 351-0193 (JP); Shibaoka, Mikio, Wako-shi Saitama 351-0193 (JP)
(74) Representative: Piésold, Alexander James

(56) References cited:
- DE-A1- 4 423 111
- US-A- 2 582 775
- US-A- 6 135 469
- US-B1- 6 349 953
- PATENT ABSTRACTS OF JAPAN vol. 1999, no. 05, 31 May 1999 (1999-05-31) -& JP 11 034912 A (PRESS KOGYO CO LTD), 9 February 1999 (1999-02-09)
- PATENT ABSTRACTS OF JAPAN vol. 1995, no. 09, 31 October 1995 (1995-10-31) -& JP 07 164845 A (NISSAN MOTOR CO LTD), 27 June 1995 (1995-06-27)

## Description

The present invention relates to an automotive body structure provided with an H-type torsion beam suspension system.

As a rear wheel suspension system for a front wheel drive automobile, there is known an H-type torsion beam suspension system which includes a pair of trailing arms laterally spaced from each other and a torsion beam connecting intermediate parts of the trailing arms with each other (see Japanese patent laid open publication No. 2001-113925). The H-type torsion beam suspension system has the advantage that it can provide a smooth ride and a stable cornering in spite of its simple and compact structure.

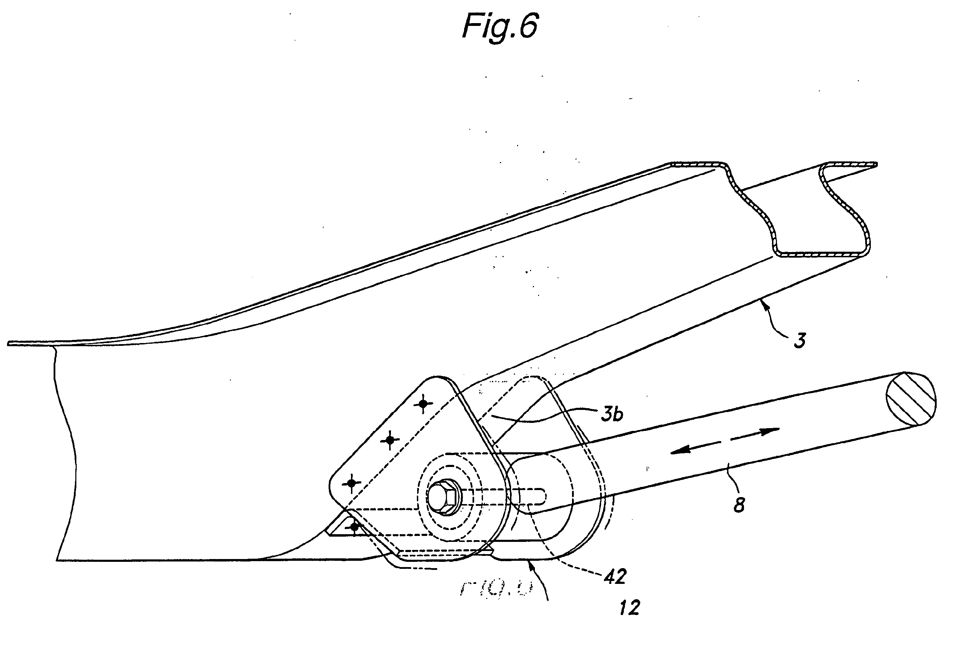

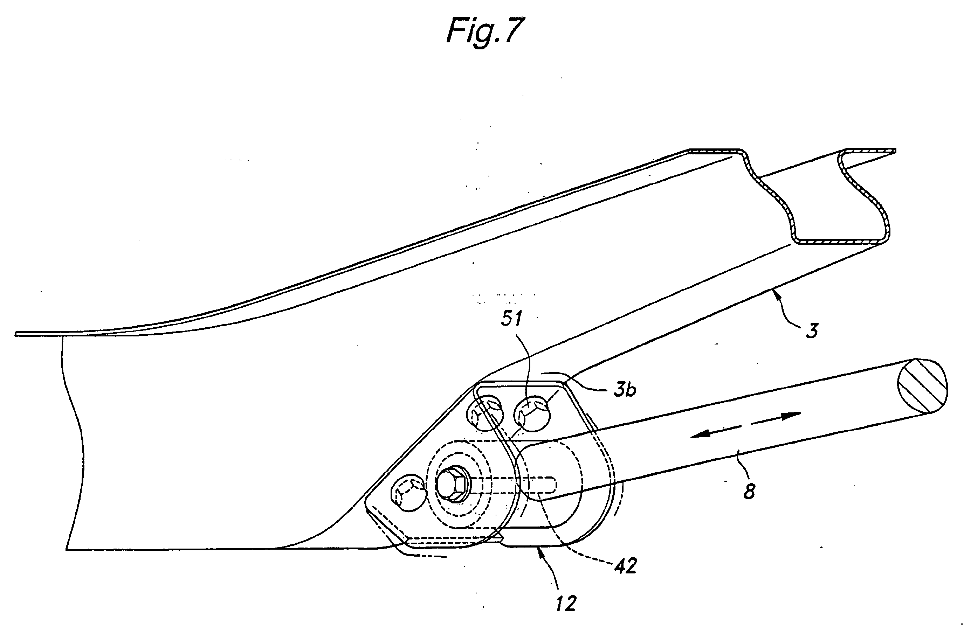

In an automobile provided with an H-type torsion beam suspension system, the front end of each of the right and left trailing arms is pivotally attached to the floor frame of the vehicle body. Because the floor frame typically consists of stamp formed thin steel plate, the support bracket for the trailing arm cannot be integrally formed with the floor panel, and must be attached to the floor panel by spot welding or by using threaded bolts. In the example illustrated in Figure 6, the support bracket 12 is spot welded to a kick up portion 3b of a floor frame 3 at the both side surfaces and lower surface thereof. In the example illustrated in Figure 7, the support bracket 12 is attached to the lower surface of a floor frame 3 by using four threaded bolts 51. In Figures 6 and 7, the trailing arms 8 are supported by the support brackets 12 via pivot bolts 42.

In an H-type torsion beam suspension system, as the wheel is subjected to a lateral force during a cornering movement of the automobile, a large fore-and-aft force is transmitted from the trailing arm 8 to the pivot bolt 42 (as indicated by arrows in Figures 6 and 7). Therefore, when a vehicle operator steers the automobile, the support bracket 12 deforms as indicated by the double-dot chain-dot lines in Figure 6 and 7 in an early phase of the cornering movement, and this causes a time lag in the generation of a cornering force. This, combined with an unanticipated change in the toe angle of the wheel, causes a reduction in the steering response and motion stability of the automobile. The structure of the pre-characterising part of claim 1 is known from DE 4423111 A1.

In view of such problems of the prior art, a primary object of the present invention is to provide a body structure for an automobile that can improve the support rigidity of the trailing arms.

A second object of the present invention is to provide a body structure for an automobile that can ensure the motion stability and the steering response of the automobile.

Viewed from one aspect the present invention provides a body structure for an automobile, comprising: a pair of floor frames each extending in a substantially fore-and-aft direction and including a horizontal portion and a kick up portion extending from a rear end of the horizontal portion and slanted in an upward direction; a pair of brackets each securely attached to the kick up portion of the corresponding floor frame; and an H-type torsion beam wheel suspension system including a pair of trailing arms each pivotally supported by the corresponding bracket via a pivot shaft and a torsion beam connecting intermediate parts of the trailing arms with each other; wherein the horizontal portion of each floor frame is provided with a lower surface disposed at a substantially same elevation as an axial center of the pivot shaft, and each support bracket includes a reinforcing member characterised in that the reinforcing member connects a part of the support bracket supporting the pivot shaft with the lower surface of the horizontal portion, and the reinforcing member includes a substantially linear section extending between the part of the support bracket supporting the pivot shaft and the lower surface of the horizontal portion of the corresponding floor frame. Typically, a part of each kick up portion having the corresponding bracket securely attached thereto is slanted in an inboard direction from a forward end to a rear end thereof.

According to such an arrangement of the present invention, because the part of the support bracket supporting the pivot shaft is connected to the lower surface of the horizontal portion via the reinforcing member, even when a large force is transmitted from the trailing arm to the pivot shaft, the support bracket is prevented from deforming excessively.

According to a preferred embodiment of the present invention, each bracket includes an inboard side wall and an outboard side wall, the corresponding pivot shaft extending between the two side walls, and the corresponding reinforcing member is securely attached to both the inboard side wall and the lower surface of the horizontal portion of the corresponding floor frame.

Preferably, each reinforcing member includes a vertical flange bent perpendicularly from the linear section and fixedly attached to the inboard side wall of the corresponding bracket. When the body structure further comprises a middle cross member extending laterally between the two floor frames slightly ahead of the kick up portions, each reinforcing member may be also securely attached to a lower surface of the middle cross member.

Because the force acting upon the trailing arm is transmitted to the support bracket via the pivot shaft, it is advantageous to directly support the pivot shaft. It can be accomplished if each pivot shaft comprises a threaded portion extending inboard from the inboard side wall of the corresponding bracket and a nut threaded to the threaded portion of the pivot shaft, the nut being welded to the reinforcing member. Preferably, the reinforcing member is provided with a recess receiving the nut therein, and the nut is fillet welded to the reinforcing member in the recess so that the nut can be most firmly secured to the reinforcing member.

A preferred embodiment of the present invention will now be described by way of example only and with reference to the appended drawings, in which:
Figure 1 is aside view of a rear portion of an automobile embodying the present invention;
Figure 2 is a view as seen in the direction indicated by II in Figure 2;
Figure 3 is an enlarged view of a part indicated by III in Figure 2;
Figure 4 is an enlarged view as seen in the direction indicated by IV in Figure 2;
Figure 5 is a sectional view taken along line V-V in Figure 3;
Figure 6 is a side view of an exemplary conventional body structure for an automobile; and
Figure 7 is a side view of another exemplary conventional body structure for an automobile.

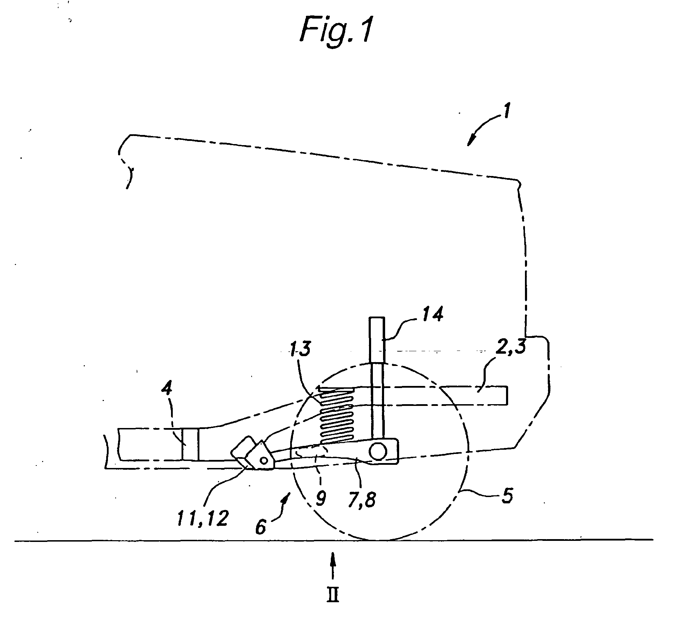

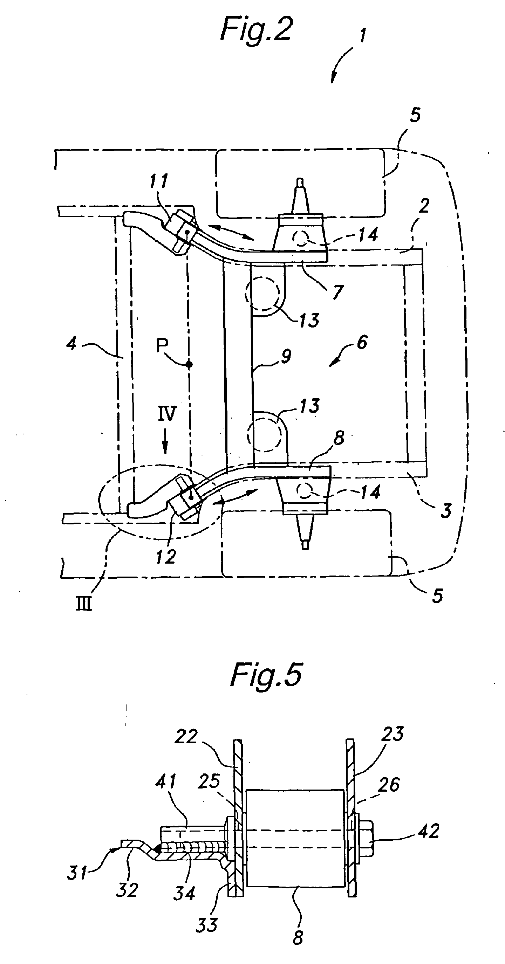

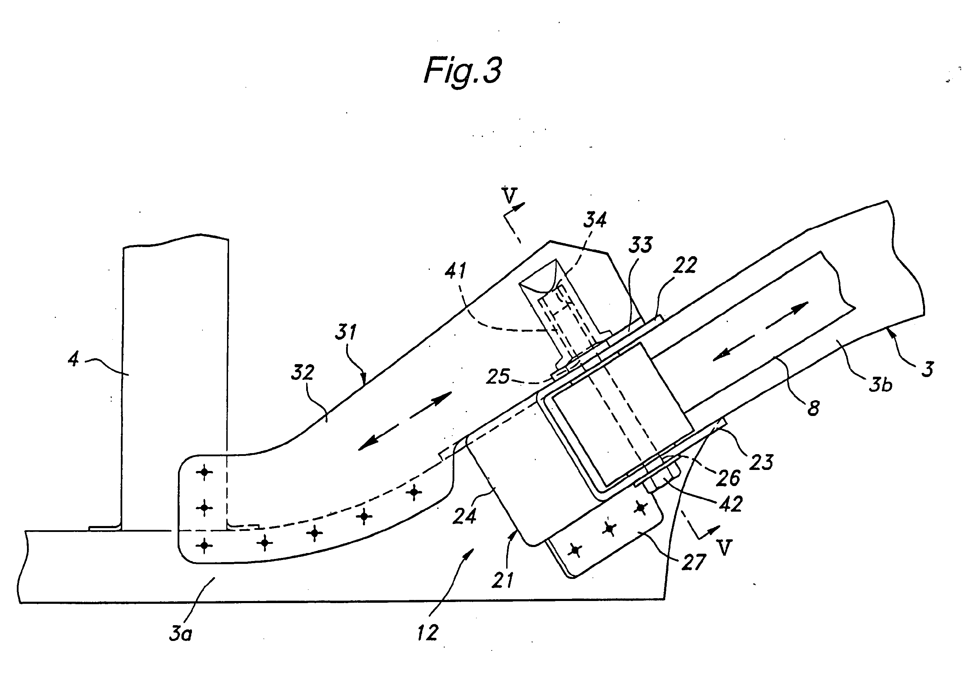

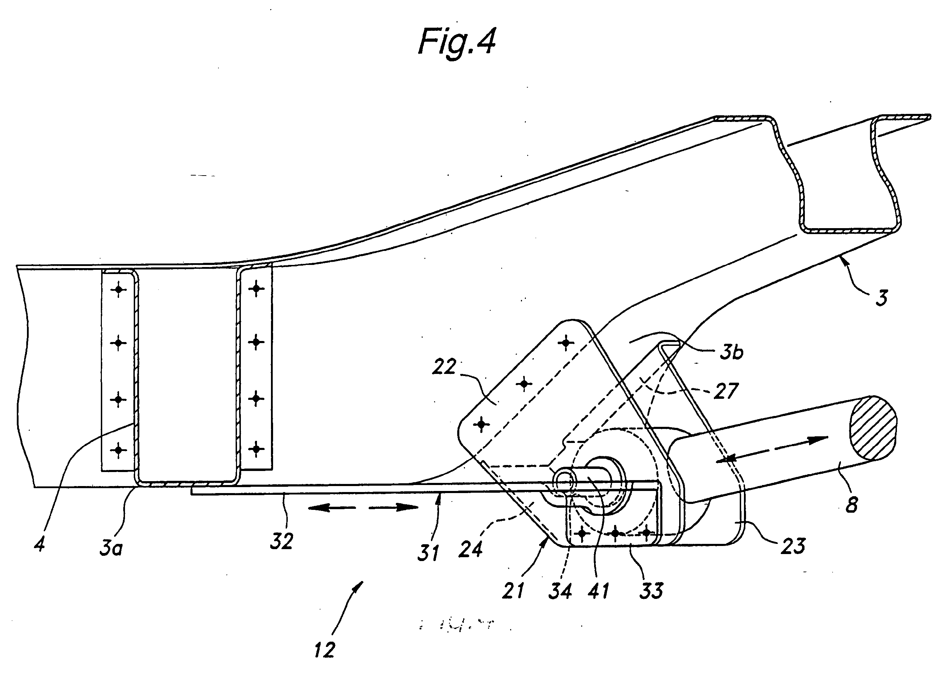

Figure 1 is a side view of a rear portion of an automobile embodying the present invention, and Figure 2 is a view (bottom view) as seen in the direction indicated by II in Figure 2. Figure 3 is an enlarged view of a part indicated by III in Figure 2, Figure 4 is an enlarged view as seen in the direction indicated by IV in Figure 2, and Figure 5 is a sectional view taken along line V-V in Figure 3.

As shown in Figures 1 and 2, the automobile 1 embodying the present invention is provided with right and left floor frames 2 and 3 and a middle cross member 4 for its structural members on its lower surface, and further comprises an H-type torsion beam wheel suspension system 6. The suspension system 6 comprises right and left trailing arms 7 and 8, a torsion beam 9 connecting intermediate portions of the trailing arms 7 and 8 with each other, right and left support brackets 11 and 12 pivotally supporting the corresponding trailing arms 7 and 8, respectively, right and left coil springs 13 serving as suspension springs and right and left hydraulic dampers 14 serving as suspension dampers.

The structure of the support brackets is described in the following with reference to Figures 3 and 4. As the vehicle body structural members and support brackets are symmetric with respect to the longitudinal center line of the vehicle body, only the components on the right hand side of the vehicle body are mentioned in the description of the preferred embodiment.

Referring to Figure 4, the floor frame 3 comprises a horizontal portion 3a having a horizontal lower surface and a kick up portion 3b which extends rearward from the rear end of the horizontal portion 3a in an upwardly slanted manner. In the illustrated embodiment, the kick up portion 3b is disposed somewhat behind the middle cross member 4, and curves inward. The rear portion of the kick up portion 3b extends substantially in the fore-and-aft direction of the vehicle body, and the trailing arm 8 also curves similarly as the floor frame 3 as seen in the plan view. As shown in Figures 3 and 4, the support bracket 11 comprises a bracket main body 21 fixedly attached to the kick up portion 3b, a reinforcement member 31 fixedly attached to both the horizontal portion 3a and middle cross member 4 and a nut 41 threadably engaging a pivot bolt (pivot shaft) 42 which is described hereinafter.

The bracket main body 21 is made of stamp formed steel plate, and comprises a pair of side walls 22 and 23 and a connecting wall 24 that connects the two side walls with each other at their front edges so as to define the shape of a substantially rectangular C-shape. The two side walls 22 and 23 are formed with bolt holes 25 and 26 opposite to each other at a substantially same elevation as the horizontal portion 3a of the floor frame 3. Through these bolt holes 25 and 26 is passed a pivot bolt 42 that serves as a pivot shaft for the trailing arm 8. An upper end of the inboard side wall 22 is spot welded to the inboard side surface of the kick up portion 3b. From an upper end of the right side wall 23 extends a connecting flange 27 in an outboard direction which is spot welded to the lower surface of the kick up portion 3b.

The reinforcement member 31 is also made of stamp formed steel plate, and connects the bracket main body 21 with the horizontal portion 3a of the floor frame member 3 with a linear section 32 thereof that extends from the lower surface of the middle cross member 4 to the side surface of the bracket main body 21 and a connecting flange 33 extending downwardly from the end of the linear section 32 adjacent to the bracket main body 21. The front end of the linear section 32 is spot welded to both the lower surface of the horizontal portion 3a and the lower surface of the middle cross member 4. In particular, a side edge of the linear section 32 is spot welded to the lower surface of the floor frame 3 over a significant length thereof. The connecting flange 33 of the reinforcement member 31 is spot welded to the inboard side wall 22 of the bracket main body 21.

The reinforce member 31 is formed with a retaining recess 34 at a position corresponding to the bolt hole 25 of the inboard side wall 22. As shown in Figure 5, the aforementioned nut 41 is received in this retaining recess 34 and fillet welded to the reinforcement member 31.

When a lateral force is applied to the rear wheel 5 owing to the cornering movement of the automobile 1, as indicated by arrows in Figure 2, the trailing arms 7 and 8 and the torsion beam 9 rotate around the middle point P between the right and left support brackets 11 and 12. Therefore, if the lateral force applied to the rear wheel 5 is significant, the pivot bolt 42 receives a relatively large fore-and-aft force (indicated by arrows in Figure 4) from the trailing arm 8. However, according to the illustrated embodiment, because the retaining part (or the nut 41) that retains the pivot bolt 42 in the support bracket 11 is connected to both the lower surface of the horizontal portion 3a of the floor frame 3 and the lower surface of the middle cross member 4 by the linear section 32 of the reinforcement member 31, the load is favorably supported by the floor frame 3 and the middle cross member 4. As a result, the deflection or deformation of the bracket main body 21 which used to be the problem with the prior art is substantially eliminated. Thereby, the cornering force can be promptly produced following a steering input, and the motion stability (including steering response) of the automobile can be substantially improved.

The present invention was described in terms of a preferred embodiment, but the present invention is not limited by the illustrated embodiment, but can be modified in various ways. For instance, although spot welding was employed for attaching the support brackets to the floor frames and middle cross member in the foregoing embodiment, threaded bolts and rivets may also be used for the same purpose. Each support bracket consisted of a bracket main body and a reinforcing member which are separate from each other in the illustrated embodiment, but they may also be formed as a single-piece stamp formed component. Also, the linear section 32 of the reinforcing member was horizontal in the illustrated embodiment, but may also be slightly slanted from the horizontal orientation as long as it is capable of effectively reinforcing the support bracket 12. Furthermore, the specific structure of the H-type torsion beam suspension system and those of the various components may be freely modified without departing from the spirit of the present invention.

The contents of the original Japanese patent application on which the Paris Convention priority claim is made for the present application are incorporated in this application by reference.

## Claims

1. A body structure for an automobile, comprising:
a pair of floor frames (2,3) each extending in a substantially fore-and-aft direction and including a horizontal portion (3a) and a kick up portion (3b) extending from a rear end of the horizontal portion and slanted in an upward direction;
a pair of brackets (11, 12) each securely attached to the kick up portion of the corresponding floor frame; and
an H-type torsion beam wheel suspension system (6) including a pair of trailing arms (7, 7) each pivotally supported by the corresponding bracket via a pivot shaft (42) and a torsion beam (9) connecting intermediate parts of the trailing arms with each other;
wherein the horizontal portion of each floor frame is provided with a lower surface disposed at a substantially same elevation as an axial center of the pivot shaft, and each support bracket includes a reinforcing member (31) **characterised in that** the reinforcing member (31) connects a part of the support bracket supporting the pivot shaft with the lower surface of the horizontal portion, and the reinforcing member (31) includes a substantially linear section (32) extending between the part of the support bracket supporting the pivot shaft and the lower surface of the horizontal portion of the corresponding floor frame.

2. The body structure for an automobile according to claim 1, wherein a part of each kick up portion having the corresponding bracket securely attached thereto is slanted in an inboard direction from a forward end to a rear end thereof.

3. The body structure for an automobile according to claim 1 or 2, wherein each bracket includes an inboard side wall (22) and an outboard side wall (23), the corresponding pivot shaft extending between the two side walls, and the corresponding reinforcing member is securely attached to both the inboard side wall and the lower surface of the horizontal portion of the corresponding floor frame.

4. The body structure for an automobile according to claim 1, 2 or 3, further comprising a middle cross member (4) extending laterally between the two floor frames slightly ahead of the kick up portions, and each reinforcing member is also securely attached to a lower surface of the middle cross member

5. The body structure for an automobile according to claim 1, wherein each reinforcing member further includes a vertical flange (33) bent perpendicularly from the linear section and fixedly attached to the inboard side wall of the corresponding bracket.

6. The body structure for an automobile according to any preceding claim, wherein each pivot shaft comprises a threaded portion extending inboard from the inboard side wall of the corresponding bracket and a nut (41) threaded to the threaded portion of the pivot shaft, the nut being welded to the reinforcing member.

7. The body structure for an automobile according to claim 6, wherein the reinforcing member is provided with a recess (34) receiving the nut therein, and the nut is fillet welded to the reinforcing member in the recess.

8. The body structure for an automobile according to claim 1, wherein an upper portion of an inboard side wall of each bracket is securely attached to an inboard side surface of the corresponding floor frame.

9. The body structure for an automobile according to claim 8, wherein an outboard side wall of each bracket is provided with an upper flange (27) which is securely attached to a lower surface of the corresponding floor frame.

10. The body structure for an automobile according to claim 8, wherein each bracket is further provided with a connecting wall (24) that connects front edges of the two side walls with each other.

## Patentansprüche

1. Körperstruktur für ein Kraftfahrzeug, umfassend:
ein Paar von Bodenrahmen (2, 3), die sich beide im Wesentlichen in einer Vorwärts-Rückwärts-Richtung erstrecken und einen horizontalen Abschnitt (3a) und einen Aufstoßabschnitt (3b) einschließen, der von einem hinteren Ende des horizontalen Abschnitts ausgeht und in einer Aufwärtsrichtung geneigt ist;
ein Paar von Trägern (11, 12), die beide am. Aufstoßabschriitt des entsprechenden Bodenrahmens sicher befestigt sind; und
ein H-Torsionsträger-Radaufhängungssystem (6), welches ein Paar von Nachlaufarmen (7, 7) einschließt, die beide von dem entsprechenden Träger über einen Schwenkschaft (42) und einen Torsionsträger (9) gehaltert sind, welche die Zwischenteile der Nachlaufarme miteinander verbinden;
wobei der horizontale Abschnitt jedes Bodenrahmens mit einer unteren Fläche versehen ist, die auf im Wesentlichen gleicher Höhe angeordnet ist wie eine Achsenmitte des Schwenkschafts, und jeder Halterungsträger ein Verstärkungsglied (31) einschließt,
**dadurch gekennzeichnet, dass** das Verstärkungsglied (31) einen Teil des den Schwenkschaft halternden Halterungsträgers mit der unteren Fläche des horizontalen Abschnitts verbindet und dass das Verstärkungsglied (31) einen im Wesentlichen linearen Abschnitt (32) einschließt, der sich zwischen dem den Schwenkschaft halternden Teil des Halterungsträgers und der unteren Fläche des horizontalen Abschnitts des entsprechenden Bodenrahmens erstreckt.

2. Körperstruktur für ein Kraftfahrzeug gemäß Anspruch 1, bei welcher ein Teil jedes Aufstoßabschnitts, an welchem der entsprechende Träger sicher befestigt ist, von einem vorderen Ende in einer nach innen zeigenden Richtung zu seinem hinteren Ende geneigt ist.

3. Körperstruktur für ein Kraftfahrzeug gemäß Anspruch 1 oder 2, bei welcher jeder Träger eine innere Seitenwand (22) und eine äußere Seitenwand (23) einschließt, wobei sich der entsprechende Schwenkschaft zwischen den beiden Seitenwänden erstreckt und das entsprechende Verstärkungsglied sowohl an der inneren Seitenwand als auch an der unteren Fläche des horizontalen Abschnitts des entsprechenden Bodenrahmens sicher befestigt ist.

4. Körperstruktur für ein Kraftfahrzeug gemäß Anspruch 1, 2 oder 3, die ferner ein mittleres Querglied (4) umfasst, welches sich etwas vor den Aufstoßabschnitten seitlich zwischen den beiden Bodenrahmen erstreckt, und wobei jedes Verstärkungsglied außerdem an einer unteren Fläche des mittleren Querglieds sicher befestigt ist.

5. Körperstruktur für ein Kraftfahrzeug gemäß Anspruch 1, bei welcher jedes Verstärkungsglied ferner einen vertikalen Flansch (33) einschließt, der vom linearen Abschnitt orthogonal weggebogen ist und an der inneren Seitenwand des entsprechenden Trägers fest befestigt ist.

6. Körperstruktur für ein Kraftfahrzeug gemäß einem der vorstehenden Ansprüche, bei welcher jeder Schwenkschaft einen mit einem Gewinde versehenen Abschnitt umfasst, der sich von der inneren Seitenwand des entsprechenden Trägers nach innen erstreckt, sowie eine auf den mit einem Gewinde versehenen Abschnitt geschraubte Mutter (41), wobei die Mutter an das Verstärkungsglied geschweißt ist.

7. Körperstruktur für ein Kraftfahrzeug gemäß Anspruch 6, bei welcher das Verstärkungsglied mit einer die Mutter in sich aufnehmenden Ausnehmung (34) versehen ist und die Mutter in der Ausnehmung mittels einer Kehlnahtschweißung am Verstärkungsglied befestigt ist.

8. Körperstruktur für ein Kraftfahrzeug gemäß Anspruch 1, bei welcher ein oberer Abschnitt einer inneren Seitenwand jedes Trägers an einer inneren Seitenfläche des entsprechenden Bodenrahmens sicher befestigt ist.

9. Körperstruktur für ein Kraftfahrzeug gemäß Anspruch 8, bei welcher eine äußere Seitenwand jedes Trägers mit einem oberen Flansch (27) versehen ist, der an einer unteren Fläche des entsprechenden Bodenrahmens sicher befestigt ist.

10. Körperstruktur für ein Kraftfahrzeug gemäß Anspruch 8, bei welcher jeder Träger ferner mit einer Verbindungswand (24) versehen ist, die vordere Ränder der beiden Seitenwände miteinander verbindet.

## Revendications

1. Structure de carrosserie pour une automobile, comprenant :
une paire de châssis de plancher (2, 3), s'étendant chacun dans une direction sensiblement longitudinale et comprenant une partie horizontale (3a) et une partie pivotante (3b) s'étendant à partir d'une extrémité arrière de la partie horizontale et inclinée dans une.direction ascendante ;
une paire de consoles (11, 12), chacune fixée de manière fixe à la partie pivotante du châssis de plancher correspondant ; et
un système de suspension de roue (6) à poutre de torsion de type en H, comprenant une paire de bras de fuite (7, 7) chacun supporté de manière pivotante par la console correspondante via un arbre de pivot (42) et une poutre de torsion (9) raccordant des parties intermédiaires des bras de fuite entre elles ;
dans laquelle la partie horizontale de chaque châssis de plancher est dotée d'une surface inférieure disposée sensiblement à la même hauteur qu'un centre axial de l'arbre de pivot, et chaque console de support comprend un élément de renforcement (31), **caractérisée en ce que** l'élément de renforcement (31) raccorde une partie de la console de support supportant l'arbre de pivot avec la surface inférieure de la partie horizontale, et l'élément de renforcement (31) comprend une section sensiblement linéaire (32) s'étendant entre la partie de la console de support supportant l'arbre de pivot et la surface inférieure de la partie horizontale du châssis de plancher correspondant.

2. Structure de carrosserie pour une automobile selon la revendication 1, dans laquelle une partie de chaque partie pivotante ayant la console correspondante fixée de manière fixe à celle-ci, est inclinée dans une direction vers l'intérieur d'une extrémité avant vers son extrémité arrière.

3. Structure de carrosserie pour une automobile selon la revendication 1 ou 2, dans laquelle chaque console comprend une paroi latérale interne (22) et une paroi latérale externe (23), l'arbre de pivot correspondant s'étendant entre les deux parois latérales, et l'élément de renforcement correspondant est fixé de manière fixe à la fois à la paroi latérale interne et à la surface inférieure de la partie horizontale du châssis de plancher correspondant.

4. Structure de carrosserie pour une automobile selon la revendication 1, 2 ou 3, comprenant en outre une traverse centrale (4) s'étendant latéralement entre les deux châssis de plancher légèrement devant les parties pivotantes, et chaque élément de renforcement est également fixé de manière fixe à une surface inférieure de la traverse centrale.

5. Structure de carrosserie pour une automobile selon la revendication 1, dans laquelle chaque élément de renforcement comprend en outre un rebord vertical (33) courbé perpendiculairement par rapport à la section linéaire et fixé de manière fixe à la paroi latérale interne de la console correspondante.

6. Structure de carrosserie pour une automobile selon l'une quelconque des revendications précédentes,
dans laquelle chaque arbre de pivot comprend une partie filetée s'étendant vers l'intérieur à partir de la paroi latérale interne de la console correspondante et un écrou (41) fileté sur la partie filetée de l'arbre de pivot, l'écrou étant soudé à l'élément de renforcement.

7. Structure de carrosserie pour une automobile selon la revendication 6, dans laquelle l'élément de renforcement est doté d'un évidement (34) recevant l'écrou à l'intérieur de celui-ci, et l'écrou est soudé en cordon sur l'élément de renforcement dans l'évidement.

8. Structure de carrosserie pour une automobile selon la revendication 1, dans laquelle une partie supérieure de la paroi latérale interne de chaque console est fixée de manière fixe à une surface latérale interne du châssis de plancher correspondant.

9. Structure de carrosserie pour une automobile selon la revendication 8, dans laquelle une paroi latérale externe de chaque console est dotée d'un rebord supérieur (27) qui est fixé de manière fixe à une surface inférieure du châssis de plancher correspondant.

10. Structure de carrosserie pour une automobile selon la revendication 8, dans laquelle chaque console est en outre dotée d'une paroi de raccordement (24) qui raccorde les bords avant des deux parois latérales entre eux.
